# EUROPÄISCHE PATENTSCHRIFT

(11) **EP 4 143 113 B1**
(45) Veröffentlichungstag und Bekanntmachung des Hinweises auf die Patenterteilung: **14.05.2025**
(21) Anmeldenummer: 21719561.9
(22) Anmeldetag: 13.04.2021
(51) Int. Cl.: B65G 47/64, B07C 5/10, B07C 5/36, B65G 1/04, B65G 43/08

(54) **TRANSPORTVORRICHTUNG MIT EINER SPEICHERVORRICHTUNG UND VERFAHREN ZU DEREN BETRIEB**
TRANSPORT DEVICE HAVING A STORAGE DEVICE, AND METHOD FOR OPERATING SAME
DISPOSITIF DE TRANSPORT POURVU D'UN DISPOSITIF DE STOCKAGE, ET SON PROCÉDÉ DE FONCTIONNEMENT

(30) Priorität: 27.04.2020 CH 4912020
(43) Veröffentlichungstag der Anmeldung: 08.03.2023
(73) Patentinhaber: Ferag AG, 8340 Hinwil ZH (CH)
(72) Erfinder: DURTSCHI, Andreas, 8820 Wädenswil (CH)
(74) Vertreter: Rentsch Partner AG
(86) Internationale Anmeldenummer: PCT/EP2021/059513
(87) Internationale Veröffentlichungsnummer: WO 2021/219361

(56) Entgegenhaltungen:
- EP-A2- 2 784 208
- WO-A1-2014/009138
- AT-U1- 13 875
- DE-A1- 102007 025 553
- DE-A1- 102012 001 868
- US-A1- 2017 225 903

## Beschreibung

### Gebiet der Erfindung

Die vorliegende Erfindung bezieht sich auf das Gebiet der Intralogistik und betrifft Verfahren zum Betrieb einer Transportvorrichtung mit einer Speichervorrichtung und eine Transportvorrichtung mit einer Speichervorrichtung.

### Hintergrund der Erfindung

In der Intralogistik kommen verschiedene Vorrichtungen zum Fördern von Transportgütern zum Einsatz, wobei die Transportgüter typischerweise mit geeigneten Transporteinheiten gefördert werden. Ein Aspekt in der Intralogistik betrifft dabei das Einspeichern von Transporteinheiten in einen oder mehreren Speichern. Insbesondere kann der Speicher ein Zwischenspeicher sein, in welchen Transporteinheiten für eine bestimmte Zeit eingespeichert und bei Bedarf zur weiteren Förderung wieder ausgespeichert werden. Mit geeigneten Zwischenspeichern können zum Beispiel Sortiervorgänge vorgenommen werden, was insbesondere bei der Kommissionierung von Waren eine wichtige Rolle spielt.

Je nach Anforderung können die Transporteinheiten in einer Fördervorrichtung mit festem Abstand zueinander oder mit veränderlichem Abstand, z.B. in Pufferstrecken, zueinander gefördert werden. Für die Erhöhung der Förderleistung und/oder der Kommissionierleistung ist es dabei erwünscht, eine möglichst optimale Auslastung der Fördervorrichtung zu erreichen. Nebst einer platzsparenden Anordnung der Transporteinheiten mit kleinstmöglichem Abstand zueinander stellt eine möglichst hohe Ausnutzung des verfügbaren Platzes in einem Speicher ein wichtiger Faktor zur Optimierung der Auslastung dar.

Ein Beispiel einer Förderanlage mit Tragetaschen, bei welcher der Platzbedarf der Tragetaschen berücksichtigt wird, wird in der DE102010053590 A1 beschrieben. Die Tragetasche umfasst eine Aufhängestelle für einen Taschenbeutel zur Aufnahme von Fördergut, wobei der Taschenbeutel eine Abmessung aufweist, die in einem leeren Zustand einen Kleinstwert und in einem mit dem Fördergut beladenen Zustand einen Grösstwert einnimmt. Die Tragetasche umfasst weiter einen zwischen der Aufhängestelle und dem Taschenbeutel verschwenkbaren Abstandshalter, der in eine stabile Ruhestellung oder in eine stabile Arbeitsstellung positionierbar ist, wobei der Abstandshalter derart ausgebildet ist, dass er in seiner Arbeitsstellung zur Anlage mit einer nachfolgenden Tragetasche gelangt und derart bemessen ist, dass sich ein in der Horizontalen gemessener Abstand einstellt. Die Ausgestaltung der Tragetasche mit einem einstellbaren Abstandshalter gestattet eine optimierte Platzausnutzung sowohl beim Aufstauen von leeren Tragetaschen bei in der Ruhestellung befindlichen Abstandshaltern als auch beim Aufstauen von beladenen Tragetaschen bei in der Arbeitsstellung befindlichen Abstandshaltern.

Aus der WO 2014/009138 A1 ist eine Transportvorrichtung bekannt, die den Oberbegriff des Anspruchs 9 und dadurch auch die entsprechenden Merkmale des Anspruchs 1 offenbart.

### Darstellung der Erfindung

Es ist daher eine Aufgabe der Erfindung, ein Verfahren zum Betrieb einer Transportvorrichtung mit einer Speichervorrichtung und eine solche Transportvorrichtung mit einer Speichervorrichtung bereitzustellen, welche den Stand der Technik bezüglich des Einspeicherns von Transporteinheiten mindestens teilweise verbessern.

Diese Aufgabe wird durch die Merkmale der unabhängigen Ansprüche gelöst. Vorteilhafte Ausgestaltungen der Erfindung sind in den abhängigen Ansprüchen und in der vorliegenden Beschreibung und den Figuren gegeben.

Ein erster Aspekt der Erfindung betrifft ein Verfahren zum Betrieb einer Transportvorrichtung mit einer Speichervorrichtung, wobei das Verfahren folgende Schritte umfasst. Bereitstellen der Transportvorrichtung mit der Speichervorrichtung zum Einspeichern von Transporteinheiten, umfassend eine Mehrzahl von Transporteinheiten, eine Mehrzahl von Speicherstrecken, welche eingerichtet sind, Transporteinheiten zu speichern, eine Zuführstrecke, welche über jeweils eine Weiche an die Speicherstrecken angeschlossen ist, sowie mindestens einen an der Zuführstrecke angeordneten optischen Sensor und eine mit dem optischen Sensor verbundene Auswertelektronik. Ferner umfasst das Verfahren das Ermitteln von Messdaten mit dem optischen Sensor von einer am optischen Sensor vorbeibewegten Transporteinheit und ein Verarbeiten der vom optischen Sensor erhaltenen Messdaten mit der Auswertelektronik. Das Verarbeiten umfasst dabei ein Auswerten der erhaltenen Messdaten um die räumliche Ausdehnung in mindestens einer Dimension der vorbeibewegten Transporteinheit zu bestimmen. Vorzugsweise umfasst das Verarbeiten der Messdaten ferner ein Filtern der Messdaten um Messpunkte zu erhalten bei denen ein optischer Parameter über einem definierbaren Schwellenwert liegt. Es findet zudem ein Auswählen einer Speicherstrecke zum Einspeichern der vorbeibewegten Transporteinheit anhand der ermittelten räumliche Ausdehnung der vorbeibewegten Transporteinheit statt. Dabei umfasst das Auswählen einer Speicherstrecke auch das Vorbeiführen an der Speichervorrichtung oder das Ausschleusen der Transporteinheit vor der Speichervorrichtung. Vorzugsweise ist ein optischer Sensor vor den Weichen an der Zuführstrecke angeordnet um insbesondere als gemeinsamer optischer Sensor für alle Speicherstrecken der Speichervorrichtung zu fungieren.

Die Erfindung bietet den Vorteil, dass das Einspeichern der Transporteinheiten in die Speicherstrecken auf die räumliche Ausdehnung der einzuspeichernden Transporteinheiten angepasst werden kann. Da die Ausdehnung der Transporteinheiten vor dem Einspeichern durch den optischen Sensor und die mit dem optischen Sensor verbundene Auswertelektronik ermittelt wird, muss z.B. nicht eine bestimmte Durchschnittsausdehnung oder eine bestimmte Maximalausdehnung der Transporteinheiten angenommen werden, um das Einspeichern der Transporteinheiten mittels der Steuerung in die Speicherstrecken zu steuern.

Mit der Annahme einer Durchschnittsausdehnung kann zwar eine gewisse Durchschnittsauslastung der Speicherstrecken ermöglicht, aber z.B. nicht verhindert werden, dass versucht wird, Transporteinheiten mit einer grossen Ausdehnung in Förderrichtung in Speicherstrecken einzuspeichern, in welchen der Platz für diese Transporteinheiten nicht ausreichend ist.

Bei einem solchen Vorgang kann es dann vorkommen, dass eine betreffende Transporteinheit nicht in eine Speicherstrecke eingespeichert werden kann und sich zum Beilspiel in einer Weiche, welche die Zuführstrecke mit der Speicherstrecke verbindet, verfängt.

Die Annahme einer räumlichen Maximalausdehnung der Transporteinheiten kann zwar in dieser Hinsicht Abhilfe leisten, indem stets sichergestellt wird, dass nur in diejenigen Speicherstrecken eingespeichert wird, in welchen Transporteinheiten mit der angenommenen räumlichen Maximalausdehnung Platz hätten. Dies kann jedoch typischerweise dazu führen, dass zu viel Platz in den Speicherstrecken freigehalten wird, was sich nachteilhaft auf die Auslastung der Anlage auswirkt.

Da für jede einzuspeichernde Transporteinheit vor dem Einspeichern deren räumlichen Ausdehnung ermittelt wird und die Speicherstrecke zum Einspeichern der Transporteinheit anhand der ermittelten räumlichen Ausdehnung dieser Transporteinheit ausgewählt wird, kann die Befüllung der Speicherstrecken fortlaufend optimiert werden. Jede Transporteinheit kann daher dynamisch und selektiv eingespeichert werden, d.h. indem für jede Transporteinheit die zu diesem Zeitpunkt optimalste Speicherstrecke, z.B. diejenige mit einem geeigneten freien Platz, ausgewählt werden kann. Die ermittelte räumliche Ausdehnung, anhand welcher eine Speicherstrecke auswählt wird, kann eine räumliche Ausdehnung in mindestens einer Dimension, nämlich in Förderrichtung und/oder quer zur Förderrichtung sein.

Die Erfindung bietet den weiteren Vorteil, dass das Ermitteln der räumlichen Ausdehnung der Transporteinheiten durchgeführt werden kann, ohne die Förderung der Transporteinheiten negativ zu beeinflussen. Beispielsweise ist es nicht nötig zur Ermitteln der räumlichen Ausdehnung der Transporteinheiten diese verlangsamt zu bewegen oder anzuhalten. Es kann daher eine höchstmögliche Effizient bei der Förderung der Transporteinheiten gewährleistet werden. Ferner müssen die Transporteinheiten zur Ermittlung der räumlichen Ausdehnung nicht zusätzlich stabilisiert oder ausgerichtet werden. Dies spart zusätzliche Bauteile zur Führung bzw. Stabilisierung der Transporteinheiten im Bereich der der Zuführstecke in welcher der optische Sensor angeordnet ist. Mit anderen Worten, diese Ermittlung der räumlichen Ausdehnung wird ohne eine Führungs- oder Stabilisierungseinrichtung durchgeführt und damit ohne einen zusätzliche mechanische Einwirkungen auf die Transporteinheit. Dies erhöht die Langlebigkeit der Transportvorrichtung da die Transporteinheiten weniger mechanischen Einflüssen ausgesetzt werden.

Je nach Ausgestaltung umfassen die Messdaten eine Mehrzahl von Messpunkten.

In einigen Ausführungsformen kann die Auswertelektronik Messpunkte aus den Messdaten auswerten um die räumliche Ausdehnung in mindestens einer Dimension der vorbeibewegten Transporteinheit zu bestimmen.

Vorzugsweise misst der optische Sensor die Messdaten im Wesentlichen simultan in mehreren Punkten, die in mindestens einer Ebene liegen. Die Messpunkte umfassen jeweils einen räumlichen Abstand zwischen der vorbeifahrenden Transporteinheit und dem optischen Sensor, sowie den optischen Parameter. Die Ebene ist üblicherweise parallel zur Förderrichtung der Transporteinheiten in der Zuführstrecke. Je nach Ausgestaltung können die vom optischen Sensor ermittelten Punkte in mehreren benachbarten Ebenen liegen und ein Gitter oder Raster von Messpunkten bilden. Das im Wesentlichen simultane Ermitteln mehrerer Messpunkte erlaubt ein ungebremstes Vorbeibewegen der Transporteinheit während der Ermittlung, ohne die Genauigkeit der ermittelten Daten und die daraus ermittelte räumliche Ausdehnung der Transporteinheit negativ zu beeinträchtigen.

Vorteilhafterweise misst der optische Sensor ferner den optischen Parameter im jeweiligen Messpunkt von der Reflexion von Licht an der vorbeibewegten Transporteinheit, wobei der optische Parameter eine Intensität oder eine Polarisation ist. In einigen Ausführungsformen misst der optische Sensor das Vorhandensein einer Reflexion in jedem Messpunkt, dies erlaubt eine Bestimmung der räumlichen Ausdehnung der Transporteinheit in mindestens einer Dimension. Dabei wird von der Auswertelektronik der maximale Abstand zwischen Messpunkten bestimmt, in denen eine Reflexion von der vorbeibewegten Transporteinheit ermittelt wurde.

In einigen Ausführungsformen misst der optische Sensor die Intensität der Reflexion des Lichts von der vorbeibewegten Transporteinheit. Die Intensität ist im Allgemeinen von der Ausrichtung der reflektierenden Oberfläche der Transporteinheit abhängig, je grösser der Winkel zwischen der Flächennormalen der reflektierenden Oberfläche und der Einstrahl-/Abstrahlrichtung von der aus die Reflexion ermittelt wird, desto kleiner die Intensität der Reflexion, wobei angenommen wird, das die Einstrahl- und Abstrahlrichtung im Wesentlichen identisch sind. Mit anderen Worten, bei einer Transportvorrichtung die beispielhaft quaderförmig ausgebildet ist, kann diese während des Ermittelns der Messdaten derart zum optischen Sensor ausgerichtet sein, dass Messpunkte von zwei benachbarten Seitenflächen ermittelt werden. Infolge dessen haben die Messpunkte auf derjenigen Seitenfläche eine grössere Intensität deren Flächennormale einen kleineren Winkel mit der Einstrahlrichtung des Lichts und der Abstrahlrichtung von der aus die Reflexion ermittelt wird, als die Messpunkte auf der benachbarten Seitenfläche. Dies kann genutzt werden die Messdaten anhand der Intensität zu filtern um diejenigen Messpunkte zu erhalten die über einem definierbaren Schwellenwert liegen. Je nach Einsatzbereich kann der Schwellenwert definiert werden. Ferner kann der Schwellenwert angepasst werden um beispielsweise auf veränderliche Umgebungsbedingungen zu reagieren. Der Schwellenwert wird vorteilhaft derart gewählt, dass beim Filtern nur Messpunkte erhalten werden die zu einer Seite der Transporteinheit gehören. Dies erlaubt im Beispiel oben die Messpunkte zu filtern, sodass nur Messpunkte von der dem Sensor zugewandten Seitenfläche der beispielhaften Transporteinheit nach dem Filtern anhand der Intensität erhalten werden.

In vorteilhafter Ausführung wird zum Aussenden des Lichts ein Laser oder eine LED verwendet.

Die Auswertelektronik kann die gefilterten Messpunkte unter Verwendung von Regressionsverfahren auswerten um die räumliche Ausdehnung der Transporteinheit in mindestens einer Dimension zu ermitteln. Alternativ oder zusätzlich kann die Auswertelektronik unter Verwendung von Regressionsverfahren die Ausrichtung der Transporteinheit zum optischen Sensor zum Zeitpunkt der Ermittlung der Messdaten ermitteln. Die verwendeten Regressionsverfahren können dabei beispielsweise die Methode der kleinsten Quadrate umfassen.

In einigen Ausführungsformen ermittelt der optische Sensor von der vorbeibewegten Transporteinheit zweimalig oder mehrmalig Messdaten. Dies erlaubt der Auswertelektronik jeweils aus den ermittelten Messdaten einen Wert für die räumliche Ausdehnung in mindestens einer Dimension der vorbeibewegten Transporteinheit zu bestimmen. Vorteilhafterweise bestimmt die Auswertelektronik einen Mittelwert für die räumliche Ausdehnung basierend auf den einzelnen bestimmten Werten für die räumliche Ausdehnung. Die Bestimmung des Mittelwerts kann dabei das Bilden eines arithmetischen Mittels umfassen. Alternativ oder in Ergänzung kann die

Bestimmung des Mittelwerts ferner das Trunkieren von extremen Werten umfassen. Dies verbessert die Genauigkeit der bestimmten räumlichen Ausdehnung und die Zuverlässigkeit des Verfahrens.

Vorteilbehaftet kann die Auswertelektronik die vom mindestens einen optischen Sensor erhaltenen optischen Massdaten verarbeiteten um die räumliche Ausdehnung der vorbeibewegten Transporteinheit in einer ersten Dimension und in einer zweiten Dimension zu bestimmen, wobei die erste Dimension im Wesentlichen senkrecht zur zweiten Dimension ist. In diesem Fall umfassen die Messdaten Messpunkte die in mehreren Ebenen angeordnet sind, insbesondere in einem Gitter oder Raster angeordnet sind.

Vorteilhaft wird die Transporteinheiten mit im Wesentlichen konstanter Geschwindigkeit während der Ermittlung der Messdaten am optischen Sensor vorbeibewegt. Diese Geschwindigkeit entspricht einer für die Transportvorrichtung üblichen Fördergeschwindigkeit. Eine Verringerung der Fördergeschwindigkeit während der Ermittlung der Messdaten durch den optischen Sensor ist nicht nötig, dadurch können Effizienzeinbussen, sowie ein erhöhter technischer Aufwand bei der Transportvorrichtung vermieden werden.

Die vorbeibewegte Transporteinheit umfasst einen Laufwagen, an welchem hängend eine Trageeinheit zum Aufnehmen und/oder Mitnehmen von Transportgut schwenkbeweglich und/oder drehbeweglich befestigt ist. Das bedeutet, dass die Trageeinheit zum Zeitpunkt der Ermittlung der Messdaten durch den Sensor in Bezug zum Laufwagen aus eine Ruhelage verdreht oder verschwenkt sein kann, oder verdreht und verschwenkt sein kann.

Ein weiterer Aspekt der Erfindung ist auf eine Transportvorrichtung mit einer Speichervorrichtung zum Einspeichern von Transporteinheiten gerichtet, umfassend eine Mehrzahl von Transporteinheiten, eine Mehrzahl von Speicherstrecken, welche eingerichtet sind, Transporteinheiten zu speichern und eine Zuführstrecke, welche über jeweils eine Weiche an die Speicherstrecken angeschlossen ist. Ferner umfasst die Transportvorrichtung mindestens einen an der Zuführstrecke angeordneten optischen Sensor, der dazu ausgelegt ist Messdaten von einer am optischen Sensor vorbeibewegten Transporteinheit zu ermitteln, sowie eine mit dem optischen Sensor verbundene Auswertelektronik. Diese Auswertelektronik ist dazu ausgelegt die vom optischen Sensor erhaltenen Messdaten auszuwerten um die räumliche Ausdehnung in mindestens einer Dimension der vorbeibewegten Transporteinheit zu bestimmen. Vorteilhafterweise kann die Auswertelektronik ferner dazu ausgelegt sein, die Messdaten zu filtern um Messpunkte zu erhalten bei denen ein optischer Parameter über einem definierbaren Schwellenwert liegt. Eine mit der Auswertelektronik verbundenen Steuerung ist dazu ausgelegt anhand der ermittelten räumlichen Ausdehnung der Transporteinheit eine Speicherstrecke zum Einspeichern der Transporteinheit auszuwählen. Vorzugsweise ist der optische Sensor vor den Weichen an der Zuführstrecke angeordnet.

Die Auswertelektronik kann dabei drahtlos oder über ein Kabel mit der Steuerung zur Übermittlung der räumlichen Ausdehnung der Transporteinheit verbunden sein.

In einer Ausgestaltung sind in der Steuerung die aktuelle Anzahl der in den jeweiligen Speicherstrecken eingespeicherten Transporteinheiten, die zu den eingespeicherten Transporteinheiten zugehörigen räumlichen Ausdehnungen in Förderrichtung und die Längen der Speicherstrecken hinterlegbar, wobei die Steuerung eingerichtet ist, die freien Längen der jeweiligen Speicherstrecken aus den Längen der jeweiligen Speicherstrecken, der Anzahl der eingespeicherten Transporteinheiten und den zugehörigen Ausdehnungen in Förderrichtung zu bestimmen, und die Weichen jeweils derart zu steuern, dass die Weichen eine Transporteinheit in eine Speicherstrecke mit einer freien Länge einspeichern, welche grösser oder gleich als die von der ermittelten räumlichen Ausdehnung der Transporteinheit in Förderrichtung ist.

In einer bevorzugten Ausgestaltung gehen die Speicherstrecken als Stiche von der Zuführstrecke ab, wobei die Stiche vorzugsweise rechtwinklig zur Zuführstrecke angeordnet sind.

Durch die Bestimmung der freien Längen der Speicherstrecken kann basierend auf den ermittelten räumlichen Ausdehnungen der einzuspeichernden Transporteinheiten in Förderrichtung vorteilhafterweise einerseits sichergestellt werden, dass eine Transporteinheit jeweils in eine Speicherstrecke mit ausreichend verfügbarem Platz eingespeichert wird und andererseits verhindert werden, dass ein verfügbarer Platz einer Speicherstrecke nicht ausgenutzt wird.

Vorzugsweise ist die Steuerung ausgelegt, bei jeder Betätigung einer Weiche zum Einspeichern einer Transporteinheit in eine Speicherstrecke die aktuelle Anzahl der in dieser Speicherstrecke eingespeicherten Transporteinheiten zu erfassen bzw. zu aktualisieren.

Optional kann auch an den Speicherstrecken oder den Weichen jeweils eine Zählvorrichtung angeordnet sein, welche die in eine Speicherstrecke eingespeicherten Transporteinheiten zählt und die Anzahl an die Steuerung übermittelt.

Ferner ist die Steuerung vorzugsweise ausgelegt, für jede übermittelte räumliche Ausdehnung von eingespeicherten Transporteinheiten die zugehörige Speicherstrecke, in welche die jeweilige Transporteinheit eingespeichert wurde, zu erfassen, so dass in der Steuerung vorteilhafterweise stets die aktuelle Anzahl Transporteinheiten mit den zugehörigen Ausdehnungen in Förderrichtung hinterlegt ist.

Die Steuerung kann dann auf einfache Weise jeweils aus der hinterlegten Länge einer Speicherstrecke, der aktuellen Anzahl der in dieser Speicherstrecke eingespeicherten Transporteinheiten und den zugehörigen Ausdehnungen in Förderrichtung die freie Länge der Speicherstrecke bestimmen. Vorteilhafterweise kann die Steuerung daher sicherstellen, dass eine einzuspeichernde Transporteinheit in eine Speicherstrecke mit genügend freiem Platz eingespeichert wird, indem die Steuerung die ermittelte räumliche Ausdehnung dieser Transporteinheit in Förderrichtung mit den freien Längen der Speicherstrecken vergleicht. Ausserdem kann die Steuerung vorteilhafterweise verhindern, dass Speicherstrecken, welche noch genügend Platz für eine Transporteinheit hätten, über eine längere Zeit unausgelastet bleiben.

Da die Auslastung der Speicherstrecken vorteilhafterweise durch die Ermittlung der räumlichen Ausdehnung der Transporteinheiten gesteuert werden kann, kann z.B. auf einen Vollstandssensor verzichtet werden, wodurch u.a. Verkabelung eingespart werden kann.

Es besteht daher der Vorteil, dass die Steuerung stets auf einem aktuellen Stand bezüglich dem Füllstand der Speicherstrecken und der einzuspeichernden Transporteinheiten sein kann und das Einspeichern der Transporteinheiten entsprechend optimal steuern kann.

Die räumliche Ausdehnung der Transporteinheit kann u.a. vertikal und/oder horizontal quer zur Förderrichtung und/oder längs der Förderrichtung ermittelt werden. Bei Transporteinheiten mit Taschen kann die zu ermittelnde Ausdehnung die Tiefe, Breite und/oder Höhe der Tasche sein.

In einigen Ausführungsformen ist der optische Sensor ausgebildet, die Messdaten im Wesentlichen simultan in mehreren Punkten zu ermitteln. Die vom optischen Sensor ermittelten Punkte liegen mit Vorteil in mindestens einer Ebene und umfassen jeweils einen räumlichen Abstand zwischen der vorbeifahrenden Transporteinheit und dem optischen Sensor, sowie den optischen Parameter. In Abhängigkeit vom Anwendungsgebiet können die vom optischen Sensor ermittelten Punkte in mehreren benachbarten Ebenen liegen und ein Gitter oder Raster von Messpunkten bilden.

Vorteilhaft ist der optische Sensor ferner derart ausgebildet, als optische Parameter, eine Intensität oder eine Polarisation im jeweiligen Messpunkt von der Reflexion des Lichts zu ermitteln.

Zur Verarbeitung der vom optischen Sensor erhaltenen Messdaten kann die Auswertelektronik derart konfiguriert sein, dass diese aus den Messpunkten der gefilterten Messdaten unter Verwendung von Regressionsverfahren die räumliche Ausdehnung der Transporteinheit in mindestens einer Dimension und/oder die Ausrichtung der Transporteinheit zum optischen Sensor zum Zeitpunkt der Ermittlung der Messdaten zu ermitteln.

In einigen Ausführungen umfasst der optische Sensor ferner eine Lichtquelle zum Aussenden des Lichts, sodass die Abstrahlrichtung des Lichts und die Einstrahlrichtung in der die Messdaten ermittelt werden im Wesentlichen übereinstimmen. Zur Vermeidung von Verschattung bei der Ermittlung der Messdaten durch den optischen Sensor ist dieser vorteilhat derart angeordnet, dass eine optische Achse des optischen Sensors im Wesentlichen senkrecht zur Förderrichtung ausgerichtet ist.

In einigen Ausführungsformen ist der optische Sensor als 2D- oder 3D-Profilsensor ausgebildet, der insbesondere eine Lichtquelle und/oder eine Detektionseinheit umfasst. Je nach Anwendungsgebiet sind jedoch auch Radio-Frequenz Antennen Anordnung zur Ermittlung der Messdaten denkbar.

In einigen Ausführungsformen ist der optische Sensor als Kamera ausgebildet und die Messdaten umfassen einzelne Bilder oder Sequenzen von mehreren Bildern, die von der Auswerteelektronik beispielsweise unter Verwendung eines trainierten neuronalen Netzwerks verarbeitet werden, um die räumliche Ausdehnung in mindestens einer Dimension der vorbeibewegten Transporteinheit zu bestimmen.

In einer Ausgestaltung weisen die Transporteinheiten jeweils ein Identifikationselement, vorzugsweise einen Barcode, einen QR-Code, einen RFID Tag o.ä., auf.

Dies bietet den Vorteil, dass die Transporteinheiten identifizierbar sind. Insbesondere können die eindeutigen Identifikationen der Transporteinheiten in der Steuerung hinterlegt und die Transporteinheiten vorzugsweise einzeln verfolgt werden.

In einer Ausgestaltung ist an der Zuführstrecke eine Auslesevorrichtung angeordnet, welche mit der Steuerung verbunden ist und eingerichtet ist, das Identifikationselement einer Transporteinheit auszulesen und die ausgelesene Information an die Steuerung zu übermitteln, wobei die Steuerung vorzugsweise eingerichtet ist, die ausgelesene Information einer ermittelten von der Auswertelektronik erhaltenen räumlichen Ausdehnung der Transporteinheit zuzuordnen.

Auf diese Weise kann in der Steuerung eine ermittelte räumliche Ausdehnung mit einer Identifikation einer Transporteinheit verknüpft werden. Die Auslesevorrichtung kann unmittelbar vor oder nach dem optischen Sensor angeordnet sein. Mit "unmittelbar" ist in diesem Zusammenhang gemeint, dass in der Regel nach dem Auslesen durch die Auslesevorrichtung die Messdaten ermittelt werden und räumliche Ausdehnung derselben Transporteinheit mit der Auswertelektronik ermittelt wird, oder nach der Ermittlung der Messdaten und dem Ermitteln der Ausdehnung durch die Auswertelektronik das Identifikationselement derselben Transporteinheit ausgelesen wird. Die Auslesevorrichtung und der optische Sensor können auch auf der gleichen Höhe in Bezug auf die Förderrichtung angeordnet sein, z.B. auf gegenüberliegenden Seiten der Zuführstrecke.

Die Auslesevorrichtung kann z.B. einen RFID-Reader, einen Barcode-Reader, einen QR-code-Reader o.ä., umfassen.

Die Transporteinheiten weisen jeweils eine Trageeinheit, vorzugweise eine Tasche, zum Tragen von Transportgut auf.

Ein Transportgut kann ein Gut oder mehrere Güter umfassen. Der Fachmann versteht unter Taschen allgemein Behältnisse wie z.B. Beutel, Schachteln, Säcke, Umschläge, Körbe, Kasten, Drahtgestelle etc.

In weiteren Ausgestaltungen können die Trageeinheiten Haken, Kleiderbügel, Rahmen, Transportgestelle, Klammern, Greifer, direkte Umverpackungen etc. umfassen.

In den genannten Ausführungsformen der Transporteinheit mit Trageeinheit, welche als Tasche oder ähnliches ausgebildet ist, werden die Messdaten vom optischen Sensor üblicherweise von der Tasche ermittelt. In Ausführungsformen, bei denen das Transportgut mittels Haken der Transporteinheit oder ähnlichem befördert wird, werden die Messdaten typischerweise vom Transportgut ermittelt.

Die Transporteinheiten umfasser jeweils einen Laufwagen, an welchem hängend die Trageeinheiten jeweils schwenkbeweglich und/oder drehbeweglich befestigbar sind, wobei der Laufwagen vorzugsweise hängend in der Speichervorrichtung förderbar ist.

Die Speichervorrichtung kann mindestens eine Laufschiene umfassen, an welcher die Laufwagen förderbar sind.

Vorzugsweise ist für alle Speicherstrecken ein gemeinsamer optischer Sensor und eine gemeinsame Auswertelektronik vorgesehen. Dies bietet den Vorteil, dass nicht für jede Speicherstrecke ein separater optischer Sensor bereitgestellt werden muss und der Aufbau der Speichervorrichtung vereinfacht werden kann. Ferner kann die Steuerarchitektur und somit der Steueraufwand reduziert werden, da alle räumlichen Ausdehnungen durch die gemeinsame Auswertelektronik ermittelt und an die Steuerung übermittelt werden.

In einer Ausgestaltung ist die Steuerung eingerichtet, die Weichen jeweils derart zu steuern, dass die ersten Weichen eine Transporteinheit mit einer Ausdehnung in Förderrichtung, welche grösser als die freie Länge einer Speicherstrecke ist, an dieser Speicherstrecke vorbeiführen.

Dadurch kann verhindert werden, dass eine Transporteinheit in eine Speicherstrecke eingespeichert wird, in welcher nicht genügend Platz vorhanden ist, was ferner das Risiko reduziert, dass sich z.B. eine Transporteinheit in einer Weiche verfängt und die Speichervorrichtung und die Weiche dadurch ausfällt.

In einer Ausgestaltung umfasst die Speichervorrichtung eine Wegführstrecke, welche über jeweils zweite Weichen an die Speicherstrecken angeschlossen ist.

In einer bevorzugten Ausgestaltung sind die Speicherstrecken als Stiche zwischen der Zuführstrecke und der Wegführstrecke angeordnet, wobei die Stiche vorzugsweise rechtwinklig sowohl zur Zuführstrecke als auch zur Wegführstrecke angeordnet sind.

In der Zuführstrecke und/oder der Wegführstrecke und/oder den Speicherstrecken können die Transporteinheiten je nach Ausgestaltung mit veränderlichem oder mit festem Abstand zueinander gefördert werden. Insbesondere können die Zuführstrecke und/oder die Wegführstrecke und/oder die Speicherstrecken als Gravitationsförderstrecken oder als Taktförderstrecken ausgebildet sein.

Alternativ oder in Ergänzung kann die Steuerung bei einer Mehrzahl von Speicherstrecken, in welche eine Transporteinheit eingespeichert werden kann, eine Priorisierung anhand der freien Längen der Speicherstrecken vornehmen, z.B. indem Speicherstrecken zum Einspeichern nach absteigender freier Länge ausgewählt werden.

### Liste der Figuren

Ausführungsformen der Erfindung werden anhand der nachfolgenden Figuren und der dazugehörigen Beschreibung näher erläutert. Es zeigen:
- Figur 1: eine schematische Darstellung einer Ausführungsform einer Transportvorrichtung mit einer Speichervorrichtung;
- Figur 2: eine perspektivische und schematische Darstellung einer Ausführungsform eines optischen Sensors an einer Zuführstrecke;
- Figur 3a-c: eine schematische Darstellung von Verarbeitungsschritten der Auswertelektronik;

### Beschreibung exemplarischer Ausführungsformen

Um die Erfindung zu veranschaulichen, werden bevorzugte Ausführungsformen mit Bezug auf die Figuren näher beschrieben.

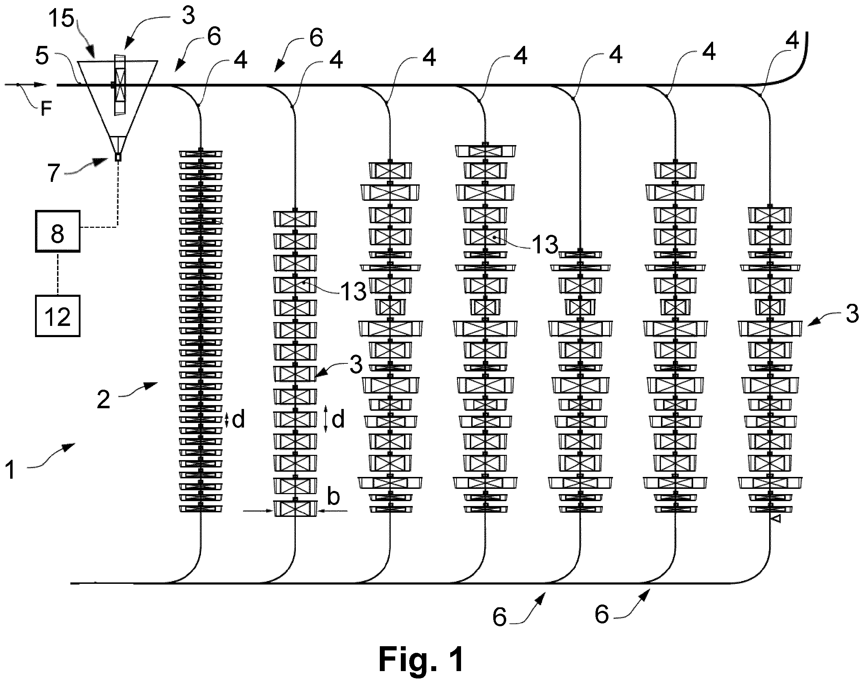

Figur 1 zeigt eine schematische Darstellung einer Ausführungsform Transportvorrichtung 1 umfassend eine Speichervorrichtung 2 mit einer Zuführstrecke 5, einer Mehrzahl von Speicherstrecken 4, einer Mehrzahl von mit Transportgütern 13 bestückten Transporteinheiten 3 und einer Steuerung 12. Im gezeigten Beispiel umfasst die Speichervorrichtung 2 sieben Speicherstrecken 4. Die Zuführstrecke 5 ist über Weichen 6 an die Speicherstrecken 4 angeschlossen. Vor den Weichen 6 ist an der Zuführstrecke 5 ein optischer Sensor 7 angeordnet, welcher eingerichtet ist, Messdaten der Transporteinheiten 3 zu ermitteln. Die mit dem optischen Sensor 7 verbundene Auswertelektronik 8 ist dazu eingerichtet vom optischen Sensor 7 erhaltenen Messdaten auszuwerten um die räumliche Ausdehnung der Transporteinheit 3 insbesondere in Förderrichtung F zu bestimmen. Die räumliche Ausdehnung einer Transporteinheit 3 in Förderrichtung F wird im Wesentlichen durch das jeweilige Transportgut 13 bestimmt. Quer zur Förderrichtung F können die räumlichen Ausdehnungen der Transporteinheiten 3 auch unterschiedlich sein, die räumliche Ausdehnung wird aber im Wesentlichen durch die Geometrie der Taschen 10 der Transporteinheiten 3 vorgegeben und ist nicht oder nur unwesentlich von den Transportgütern 13 abhängig. Die Auswertelektronik 8 übermittelt die räumliche Ausdehnung einer Transporteinheit 3 in Förderrichtung F, welche am optischen Sensor 7 vorbeigefördert wird, an die Steuerung 12, welche aufgrund der ermittelten räumlichen Ausdehnung eine Speicherstrecke 4 auswählt, welche eine freie Länge aufweist, welche grösser oder gleich der ermittelten räumlichen Ausdehnung der Transporteinheit in Förderrichtung F ist. In der gezeigten Ausführungsform ist der optische Sensor 7 seitlich neben der Zuführstrecke 5 angeordnet, es ist jedoch auch eine Anordnung der optische Sensors 7 unter- oder oberhalb der Zuführstrecke 5 denkbar. In dieser Anordnung kann der optische Sensor 7 alternativ oder in Ergänzung Messdaten der Transporteinheit 3 quer zur Förderrichtung F ermitteln und die Auswertelektronik 8 von den Messdaten die räumliche Ausdehnung der Transporteinheit 3 alternativ oder in Ergänzung quer zur Förderrichtung F bestimmen.

Die freien Längen der Speicherstrecken 4 werden von der Steuerung 12 aus der Länge der jeweiligen Speicherstrecken 4, der Anzahl von in den jeweiligen Speicherstrecken 4 eingespeicherten Transporteinheiten 3 und den dazugehörigen räumlichen Ausdehnungen in Förderrichtung F bestimmt und laufend aktualisiert.

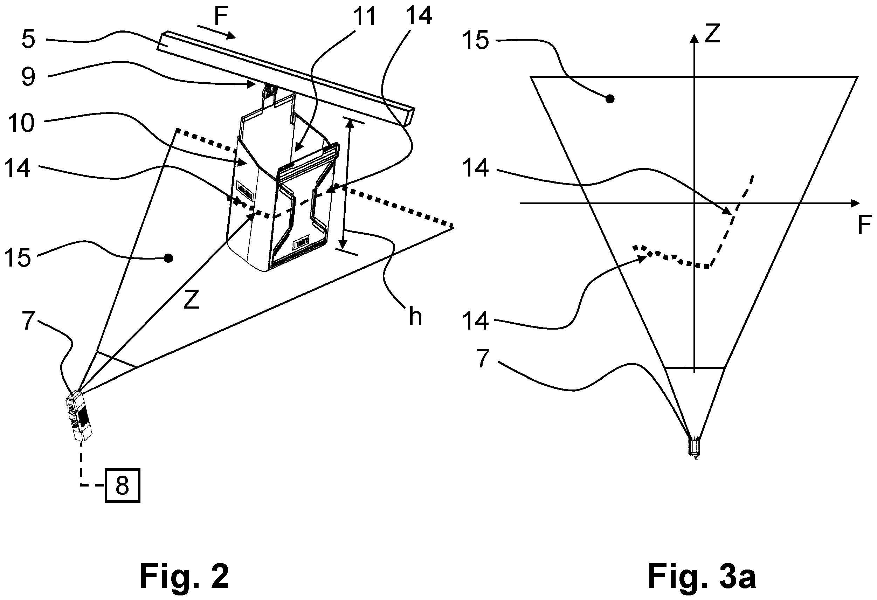

An der Zuführstrecke 5 kann ferner unmittelbar nach dem optischen Sensor 7 eine Auslesevorrichtung (nicht gezeigt) in Form eines Barcode-Readers angeordnet sein, welche eingerichtet ist, ein Identifikationselement einer Transporteinheit 3 auszulesen und die ausgelesene Identifikation an die Steuerung 12 zu übermitteln. Die Steuerung 12 ordnet die ausgelesene Identifikation der von der Auswertelektronik 8 erhaltenen räumlichen Ausdehnung der Transporteinheit 3 zu. In der Figur 1 ist in der Zuführstrecke 5 eine Transporteinheit 3 gezeigt, welche sich im Messbereich 15 des optischen Sensors 7 befindet, diese Situation ist im Detail in Figur 2 dargestellt.

In Figur 2 ist der als 2D-Profilsensor ausgebildete optische Sensor 7 gezeigt und eine vorbeibewegte Transporteinheit 3, die sich im Messbereich 15 des optischen Sensors 7 befindet. In der dargestellten Ausführung ist der Messbereich 15 des optischen Sensors 7 eine Ebene 15, die parallel zur Förderrichtung F ausgerichtet ist und in der die Reflexion in einzelnen Punkten 14 vom optischen Sensor 7 gemessen wird. Eine optische Achse Z des optischen Sensors 7 ist im Wesentlichen senkrecht zur Förderrichtung F ausgerichtet und liegt in der Ebene des Messbereichs 15. Die in Figur 2 ebenfalls dargestellte Auswertelektronik 8 verarbeitet die vom optischen Sensor 7 erhaltenen Messdaten um die räumliche Ausdehnung der vorbeibewegten Transporteinheit 3 zu bestimmen.

Dabei sind einzelne beispielhafte Zwischenschritte der durch die Auswertelektronik 8 durchgeführte Verarbeitung der Messdaten in den Figuren 3a bis 3c gezeigt. Die Messdaten umfassen hier den räumlichen Abstand zwischen dem optischen Sensor 7 und der vorbeibewegten Transporteinheit 3 in einzelnen Punkten 14, sowie die Intensität der Reflexion eines Lichts in jedem Messpunkt 14. Dieses Licht wird von einer im optischen Sensor 7 verbauten Lichtquelle zur Ermittlung der Messdaten ausgesandt, wobei die Lichtquelle z.B. eine LED oder ein Laser umfasst. Ferner umfasst der optische Sensor 7 eine Detektionseinheit mit z.B. einer CCD (charge coupled device) oder einem CMOS (complementary metal-oxide-semiconductor) Detektor

Die Messdaten umfassen ein seitliches Profil der vorbeibewegten Transporteinheit 3. Die Messpunkte 14 sind beispielhaft in den Figuren 3a bis 3c in einem orthogonalen Koordinatensystem aufgetragen, dessen Achsen die Förderrichtung F und die optische Achse Z bilden. Angedeutet ist ferner die Position des optischen Sensors 7. Der Messbereich 15 des optischen Sensors 7 liegt in der durch das Koordinatensystem definierten Ebene 15.

Wie in Figur 3a erkennbar, ist die von der Ausrichtung einer reflektierenden Oberfläche der Transporteinheit 3 abhängig ist. Je grösser der Winkel zwischen der Flächennormalen der reflektierenden Oberfläche und der optischen Achse Z ist, desto kleiner die Intensität der Reflexion die in der Richtung der optischen Achse Z vom optischen Sensor 7 ermittelt wird. Die Intensität ist bei der gezeigten Ausrichtung und Ausgestaltung der Transporteinheit 3 in den gemessenen Punkten der dem optischen Sensor 7 zugewandten Seite der Transporteinheit 3 höher als die Intensität der gemessenen Punkte auf der Vorderseite der Transporteinheit 3.

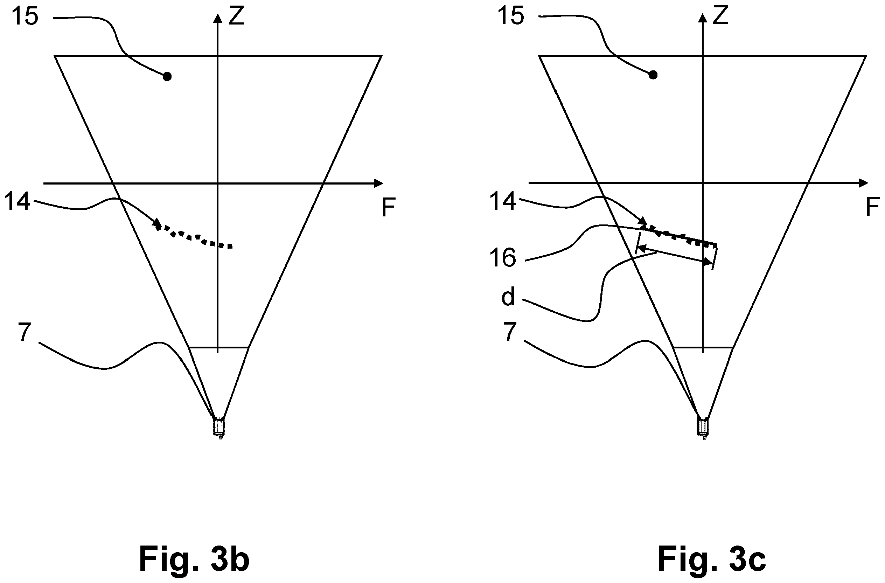

Die Auswertelektronik 8 ist dazu eingerichtet die vom optischen Sensor 7 erhaltenen Messdaten anhand eines optischen Parameters zu filtern, das Resultat dieses Filterns ist in Figur 3b beispielhaft zu sehen. Der optischere Parameter, der zum Filtern der Messdaten verwendet wird, ist die vorher beschriebe Intensität, so werden Messpunkte erhalten bei denen der optische Parameter über einem definierbaren Schwellenwert liegt. Im vorliegenden Fall bleiben nach dem Filtern nur Messpunkte von der dem optischen Sensor 7 zugewandten Seite der Transporteinheit 3 übrig.

Die Auswertelektronik 8 ist ferner eingerichtet aus den verbleibenden Messpunkten die räumliche Ausdehnung der Transporteinheit 3 in Förderrichtung F zu bestimmen. Diese Bestimmung der ist beispielhaft in Figur 3c dargestellt, wobei die Auswertelektronik 8 mittels Regressionsverfahren eine Ausgleichslinie 16 unter Verwendung der Messpunkte bestimmt. Die Ausgleichslinie ist unter anderem durch ihre Länge und ihrem Winkel zu Förderrichtung F gekennzeichnet, wobei die Länge der Ausgleichslinie 16 der räumlichen Ausdehnung der Transporteinheit 3 in Förderrichtung F entspricht. Alternativ oder in Ergänzung kann die Auswertelektronik 8 auch dazu eingerichtet sein die räumliche Ausdehnung der Transporteinheit 3 quer zur Förderrichtung F zu bestimmen, beispielsweise deren Höhe h, welche in Figur 2 zu sehen ist.

Der optische Sensor 7 ermittelt in der in Figur 2 gezeigten Ausführung von der vorbeibewegten Transporteinheit 3 mehrmalig Messdaten. Dies erlaubt der Auswertelektronik 8 jeweils aus den ermittelten Messdaten einen Wert für die räumliche Ausdehnung in Förderrichtung F der vorbeibewegten Transporteinheit 3 zu bestimmen. Darüber hinaus bestimmt die Auswertelektronik 8 einen Mittelwert für die räumliche Ausdehnung basierend auf den einzelnen bestimmten Werten für die räumliche Ausdehnung der Transporteinheit 3 in Förderrichtung F. Die Bestimmung des Mittelwerts umfasst dabei das Bilden eines arithmetischen Mittels.

Die in Figur 2 dargestellte Transporteinheit 3 umfasst einen Laufwagen 9, an dem hängend eine Trageeinheit 10 zum Tragen von Transportgut 11 schwenkbeweglich und drehbeweglich befestigt ist. Die Trageeinheit 10 der Transporteinheit 3 ist als Tasche ausgebildet und dazu ausgelegt während die Transporteinheit 3 am optischen Sensor 7 vorbeibewegt wird am Laufwagen zu schwingen und zu verdrehen. Die Transporteinheit 3 wird ungebremst am optischen Sensor 7 vorbeibewegt, mit einer Geschwindigkeit, die der üblichen Fördergeschwindigkeit der Transportvorrichtung 1 entspricht.

Es sei angemerkt, dass Bezugszeichen figurenübergreifend gleichbedeutend sind und jeweils denselben Gegenstand anzeigen.

## Patentansprüche

1. Verfahren zum Betrieb einer Transportvorrichtung (1) mit einer Speichervorrichtung (2), wobei das Verfahren folgende Schritte umfasst:
a. Bereitstellen der Transportvorrichtung (1) mit der Speichervorrichtung (2) zum Einspeichern von Transporteinheiten (3), umfassend eine Mehrzahl von Transporteinheiten (3), eine Mehrzahl von Speicherstrecken (4), welche eingerichtet sind, Transporteinheiten (3) zu speichern, eine Zuführstrecke (5), welche über jeweils eine Weiche (6) an die Speicherstrecken (4) angeschlossen ist, mindestens einen an der Zuführstrecke (5) vor den Weichen (6) angeordneten optischen Sensor (7) und eine mit dem optischen Sensor verbundene Auswertelektronik (8);
b. Ermitteln von Messdaten mit dem optischen Sensor (7) von einer am optischen Sensor (7) vorbeibewegten Transporteinheit (3), welche einen Laufwagen (9) umfasst, an welchem hängend eine Trageeinheit (10) zum Tragen von Transportgut (13) schwenkbeweglich und/oder drehbeweglich befestigt ist;
c. Verarbeiten der vom optischen Sensor (7) erhaltenen Messdaten mit der Auswertelektronik (8), wobei die Verarbeitung den folgenden Schritt umfasst:
i. Auswerten der Messdaten um die räumliche Ausdehnung in mindestens einer Dimension der vorbeibewegten Transporteinheit (3) zu bestimmen; und
d. Auswählen einer Speicherstrecke (4) zum Einspeichern der vorbeibewegten Transporteinheit (3) anhand der ermittelten räumliche Ausdehnung in mindestens einer Dimension der vorbeibewegten Transporteinheit (3).

2. Das Verfahren nach Anspruch 1, **wobei** die Auswertelektronik (8) Messpunkte aus den Messdaten auswertet um die räumliche Ausdehnung in mindestens einer Dimension der vorbeibewegten Transporteinheit (3) zu bestimmen, wobei vorzugsweise die Auswertelektronik (8) zur Verarbeitung der vom optischen Sensor (7) erhaltenen Messdaten ferner die Messdaten filtert, um Messpunkte zu erhalten bei denen ein optischer Parameter über einem definierbaren Schwellenwert liegt.

3. Das Verfahren nach Anspruch 2, **wobei** der optische Sensor (7) die Messdaten im Wesentlichen simultan in mehreren Punkten misst, die in mindestens einer Ebene (15) liegen und jeweils einen räumlichen Abstand zwischen der vorbeifahrenden Transporteinheit und dem optischen Sensor (7), sowie den optischen Parameter umfassen.

4. Das Verfahren nach mindestens einem der vorangehenden Ansprüche 2 oder 3, **wobei** der optische Sensor (7) ferner den optischen Parameter im jeweiligen Messpunkt von einer Reflexion von Licht an der vorbeibewegten Transporteinheit (3) misst.

5. Das Verfahren nach mindestens einem der vorangehenden Ansprüche 2 bis 4, **wobei** die Auswertelektronik (8) aus den Messpunkten der gefilterten Messdaten unter Verwendung von Regressionsverfahren die räumliche Ausdehnung der Transporteinheit (3) in mindestens einer Dimension und/oder die Ausrichtung der Transporteinheit (3) zum optischen Sensor (7) zum Zeitpunkt der Ermittlung der Messdaten ermittelt.

6. Das Verfahren nach mindestens einem der vorangehenden Ansprüche 1 bis 5, **wobei** der optische Sensor (7) von der vorbeibewegten Transporteinheit (3) zweimalig oder mehrmalig Messdaten ermittelt und die Auswertelektronik (8) jeweils aus den ermittelten Messdaten einen Wert für die räumliche Ausdehnung in mindestens einer Dimension der vorbeibewegten Transporteinheit (3) bestimmt und einen Mittelwert für die räumliche Ausdehnung basierend auf den Werten bestimmt.

7. Das Verfahren nach mindestens einem der vorangehenden Ansprüche 1 bis 6, **wobei** die Auswertelektronik (8) die vom mindestens einen optischen Sensor (7) erhaltenen optischen Massdaten verarbeitet um die räumliche Ausdehnung der vorbeibewegten Transporteinheit (3) in einer ersten Dimension und in einer zweiten Dimension zu bestimmen, wobei die erste Dimension im Wesentlichen senkrecht zur zweiten Dimension ist.

8. Das Verfahren nach mindestens einem der vorangehenden Ansprüche 1 bis 7, **wobei** die Transporteinheit (3) mit im Wesentlichen konstanter Geschwindigkeit während der Ermittlung der Messdaten am optischen Sensor (7) vorbeibewegt wird und diese Geschwindigkeit einer für die Transportvorrichtung üblichen Fördergeschwindigkeit entspricht.

9. Transportvorrichtung mit einer Speichervorrichtung (2) zum Einspeichern von Transporteinheiten (3), umfassend eine Mehrzahl von Transporteinheiten (3), eine Mehrzah von Speicherstrecken (4), welche eingerichtet sind, Transporteinheiten (3) zu speichern, eine Zuführstrecke (5), welche über jeweils eine Weiche (6) an die Speicherstrecken (4) angeschlossen ist, und
a. mindestens einen an der Zuführstrecke (5) angeordneten optischen Sensor (7), der dazu ausgelegt ist Messdaten von einer am optischen Sensor (7) vorbeibewegten Transporteinheit (3) zu ermitteln; und
b. eine mit dem optischen Sensor (7) verbundene Auswertelektronik (8), die dazu ausgelegt ist die vom optischen Sensor (7) erhaltenen Messdaten auszuwerten um die räumliche Ausdehnung in mindestens einer Dimension der vorbeibewegten Transporteinheit (3) zu bestimmen; und
c. eine mit der Auswertelektronik (8) verbundenen Steuerung (12), die ausgelegt ist anhand der ermittelten räumlichen Ausdehnung in mindestens einer Dimension der Transporteinheit (3) eine Speicherstrecke (4) zum Einspeichern der Transporteinheit (3) auszuwählen, **dadurch gekennzeichnet, dass** die Mehrzahl von Transporteinheiten (3) jeweils eine Trageeinheit (10) zum Tragen von Transportgut (13) umfassen, wobei die Transporteinheiten (3) einen Laufwagen (9) umfassen, an welchem hängend eine Trageinheit (10) zum Tragen von Transportgut (13) schwenkbeweglich und/oder drehbeweglich befestigt ist.

10. Die Transportvorrichtung (1) nach Anspruch 9, **wobei** die Auswertelektronik (8) ferner ausgebildet ist, Messpunkte aus den Messdaten auszuwerten, um die räumliche Ausdehnung in mindestens einer Dimension der vorbeibewegten Transporteinheit (3) zu bestimmen.

11. Die Transportvorrichtung (1) nach Anspruch 9, **wobei** die Auswertelektronik (8) ferner ausgebildet ist, zur Verarbeitung der vom optischen Sensor (7) erhaltenen Messdaten, die Messdaten zu filtern um Messpunkte zu erhalten bei denen ein optischer Parameter jeweils über einem definierbaren Schwellenwert liegt.

12. Die Transportvorrichtung (1) nach Anspruch 9 oder 11, **wobei** der optische Sensor (7) ausgebildet ist, die Messdaten im Wesentlichen simultan in mehreren Punkten zu ermitteln , die in mindestens einer Ebene liegen und jeweils einen räumlichen Abstand zwischen der vorbeifahrenden Transporteinheit und dem optischen Sensor (7), sowie den optischen Parameter umfassen, wobei der optische Sensor (7) vorzugsweise ferner derart ausgebildet ist, als optische Parameter, eine Intensität oder eine Polarisation im jeweiligen Messpunkt von der Reflexion des Lichts zu ermitteln.

13. Die Transportvorrichtung (1) nach einem der vorangehenden Ansprüche 9 bis 12, **wobei** die Auswertelektronik (8) derart konfiguriert ist aus den Messpunkten der ausgewählten Messdaten unter Verwendung von Regressionsverfahren die räumliche Ausdehnung der Transporteinheit (3) in mindestens einer Dimension und/oder die Ausrichtung der Transporteinheit zum optischen Sensor (7) zum Zeitpunkt der Ermittlung der Messdaten zu ermitteln.

14. Die Transportvorrichtung (1) nach einem der vorangehenden Ansprüche 9 bis13, **wobei** der Laufwagen (9) hängend in der Speichervorrichtung (2) förderbar ist.

## Claims

1. A method for operating a transport apparatus (1) with a storage apparatus (2), wherein the method includes the following steps:
a. providing the transport apparatus (1) with the storage apparatus (2) for storing transport units (3), including a plurality of transport units (3), a plurality of storage conveyors (4) which are configured to store transport units (3), a feeding conveyor (5) which is connected to the storage conveyors (4) via a respective switch (6), at least one optical sensor (7) arranged at the feeding conveyor (5) in front of the switches (6), and an evaluation electronics (8) connected to the optical sensor;
b. obtaining measurement data with the optical sensor (7) from a transport unit (3) moving past the optical sensor (7), which includes a carriage (9), on which a carrying unit (10) for carrying goods (13) to be transported is attached in a suspended manner pivotable and/or rotatable;
c. processing the measurement data obtained from the optical sensor (7) with the evaluation electronics (8), wherein the processing includes the following step:
i. evaluating the measurement data in order to determine the spatial extent in at least one dimension of the transport unit (3) moving past; and
d. selecting a storage conveyor (4) for storing the transport unit (3) moving past on the basis of the obtained spatial extent in at least one dimension of the transport unit (3) moving past.

2. The method as claimed in claim 1, **wherein** the evaluation electronics (8) evaluates measurement points from the measurement data in order to determine the spatial extent in at least one dimension of the transport unit (3) moving past, wherein for processing the measurement data obtained from the optical sensor (7), the evaluation electronics (8) preferably furthermore filters the measurement data in order to obtain measurement points at which an optical parameter lies above a definable threshold value.

3. The method as claimed in claim 2, **wherein** the optical sensor (7) measures the measurement data substantially simultaneously at a plurality of points which lie in at least one plane (15) and each include a spatial distance between the passing transport unit and the optical sensor (7), and also the optical parameter.

4. The method as claimed in at least one of the preceding claims 2 or 3, **wherein** the optical sensor (7) furthermore measures the optical parameter in the respective measurement point from a reflection of light at the transport unit (3) moving past.

5. The method as claimed in at least one of the preceding claims 2 to 4, **wherein** the evaluation electronics (8) determines the spatial extent of the transport unit (3) in at least one dimension and/or the alignment of the transport unit (3) to the optical sensor (7) at the time the measurement data are determined, from the measurement points of the filtered measurement data using regression methods.

6. The method as claimed in at least one of the preceding claims 1 to 5, **wherein** the optical sensor (7) two or more times determines measurement data from the transport unit (3) moving past, and the evaluation electronics (8) determines, in each case from the determined measurement data, a value for the spatial extent in at least one dimension of the transport unit (3) moving past and determines a mean value for the spatial extent based on the values.

7. The method as claimed in at least one of the preceding claims 1 to 6, **wherein** the evaluation electronics (8) processes the optical measurement data obtained from the at least one optical sensor (7) in order to determine the spatial extent of the transport unit (3) moving past in a first dimension and in a second dimension, wherein the first dimension is substantially perpendicular to the second dimension.

8. The method as claimed in at least one of the preceding claims 1 to 7, **wherein** the transport unit (3) is moved past the optical sensor (7) at a substantially constant speed during the determination of the measurement data, and this speed corresponds to a conveying speed which is typical of the transport apparatus.

9. A transport apparatus with a storage apparatus (2) for storing transport units (3), including a plurality of transport units (3), a plurality of storage conveyors (4) which are set up to store transport units (3), a feeding conveyor (5) which is connected to the storage conveyors (4) via a respective switch (6), and
a. at least one optical sensor (7) which is arranged at the feeding conveyor (5) and is configured to determine measurement data from a transport unit (3) moving past the optical sensor (7); and
b. an evaluation electronics (8) which is connected to the optical sensor (7) and is configured to evaluate the measurement data obtained from the optical sensor (7) in order to determine the spatial extent in at least one dimension of the transport unit (3) moving past; and
c. a controller (12) which is connected to the evaluation electronics (8) and is configured to select a storage conveyor (4) for storing the transport unit (3) on the basis of the determined spatial extent in at least one dimension of the transport unit (3) **characterized in that** the plurality of transport units (3) each comprise a carrying unit (10) for carrying transport goods (13), wherein the transport units (3) comprising a carriage (9) on which a carrying unit (10) for carrying goods (13) to be transported is attached in a suspended manner pivotable and/or rotatable.

10. The transport apparatus (1) as claimed in claim 9, wherein the evaluation electronics (8) is furthermore configured to evaluate measurement points from the measurement data in order to determine the spatial extent in at least one dimension of the transport unit (3) moving past.

11. The transport apparatus (1) as claimed in claim 9, **wherein** the evaluation electronics (8) is furthermore configured, for processing the measurement data obtained from the optical sensor (7), to filter the measurement data in order to obtain measurement points at which an optical parameter lies in each case above a definable threshold value.

12. The transport apparatus (1) as claimed in either of claims 9 or 11, **wherein** the optical sensor (7) is configured to determine the measurement data substantially simultaneously in a plurality of points that lie in at least one plane and each include a spatial distance between the passing transport unit and the optical sensor (7), and also the optical parameter, wherein the optical sensor (7) is furthermore preferably configured in such a way as to determine, as optical parameters, an intensity or a polarization in the respective measurement point from the reflection of the light.

13. The transport apparatus (1) as claimed in any of the preceding claims 9 to 12, **wherein** the evaluation electronics (8) is configured to determine the spatial extent of the transport unit (3) in at least one dimension and/or the alignment of the transport unit to the optical sensor (7) at the time the measurement data are determined, from the measurement points of the selected measurement data using regression methods.

14. The transport apparatus (1) as claimed in any of the preceding claims 9 to 13, **wherein** the carriage (9) is conveyable in a hanging manner in the storage apparatus (2).

## Revendications

1. Procédé de fonctionnement d'un dispositif de transport (1) avec un dispositif de stockage (2), le procédé comprenant les étapes suivantes :
a. Mise à disposition du dispositif de transport (1) avec le dispositif de stockage (2) pour le stockage d'unités de transport (3), comprenant une pluralité d'unités de transport (3), une pluralité de ligne de stockage (4), qui sont configurées pour stocker des unités de transport (3), une ligne d'alimentation (5) qui est raccordée aux lignes de stockage (4) par l'intermédiaire d'un aiguillage (6) respectif, au moins un capteur optique (7) disposé sur la ligne d'alimentation (5) en amont des aiguillages (6) et une électronique d'évaluation (8) reliée au capteur optique ;
b. Détermination de données de mesure avec le capteur optique (7) d'une unité de transport (3) déplacée devant le capteur optique (7), laquelle comprend un chariot (9) sur lequel une unité de portage (10) destinée à porter des marchandises à transporter (13) est fixée de manière suspendue et mobile en pivotement et/ou en rotation ;
c. traiter les données de mesure obtenues par le capteur optique (7) avec l'électronique d'évaluation (8), le traitement comprenant l'étape suivante :
i. l'évaluation des données de mesure pour déterminer l'extension spatiale dans au moins une dimension de l'unité de transport (3) en mouvement ; et
d. la sélection d'une ligne de stockage (4) pour stocker l'unité de transport (3) en mouvement à l'aide de l'extension spatiale déterminée dans au moins une dimension de l'unité de transport (3) en mouvement.

2. Le procédé selon la revendication 1 , **dans lequel** l'électronique d'évaluation (8) évalue des points de mesure à partir des données de mesure pour déterminer l'extension spatiale dans au moins une dimension de l'unité de transport (3) déplacée, de préférence l'électronique d'évaluation (8) pour le traitement des données de mesure obtenues par le capteur optique (7) filtre en outre les données de mesure pour obtenir des points de mesure pour lesquels un paramètre optique est supérieur à une valeur seuil définissable.

3. Le procédé selon la revendication 2, **dans lequel** le capteur optique (7) mesure les données de mesure sensiblement simultanément en plusieurs points situés dans au moins un plan (15) et comprenant chacun une distance spatiale entre l'unité de transport qui passe et le capteur optique (7), ainsi que le paramètre optique.

4. Le procédé selon au moins l'une des revendications précédentes 2 ou 3, **dans lequel** le capteur optique (7) mesure en outre le paramètre optique dans le point de mesure respectif d'une réflexion de lumière sur l'unité de transport (3) qui passe.

5. Le procédé selon au moins l'une des revendications précédentes 2 à 4, **dans lequel** l'électronique d'évaluation (8) détermine l'extension spatiale de l'unité de transport (3) dans au moins une dimension et/ou l'orientation de l'unité de transport (3) par rapport au capteur optique (7) au moment de la détermination des données de mesure à partir des points de mesure des données de mesure filtrées en utilisant des procédés de régression.

6. Le procédé selon au moins l'une des revendications précédentes1 à 5, **dans lequel** le capteur optique (7) détermine deux fois ou plus des données de mesure de l'unité de transport (3) en mouvement et l'électronique d'évaluation (8) détermine à chaque fois à partir des données de mesure déterminées une valeur pour l'extension spatiale dans au moins une dimension de l'unité de transport (3) en mouvement et détermine une valeur moyenne pour l'extension spatiale sur la base des valeurs.

7. Le procédé selon au moins l'une des revendications précédentes1 à 6, **dans lequel** l'électronique d'évaluation (8) traite les données de mesure optiques obtenues par le au moins un capteur optique (7) pour déterminer l'extension spatiale de l'unité de transport (3) en défilement dans une première dimension et dans une deuxième dimension, la première dimension étant sensiblement perpendiculaire à la deuxième dimension.

8. Le procédé selon au moins l'une des revendications précédentes1 à 7, **dans lequel** l'unité de transport (3) est déplacée devant le capteur optique (7) à une vitesse sensiblement constante pendant la détermination des données de mesure et cette vitesse correspond à une vitesse de transport usuelle pour le dispositif de transport.

9. Dispositif de transport avec un dispositif de stockage (2) pour stocker des unités de transport (3), comprenant une pluralité d'unités de transport (3), une pluralité de lignes de stockage (4), qui sont configurées pour stocker des unités de transport (3), une ligne d'alimentation (5), qui est raccordée aux lignes de stockage (4) par l'intermédiaire d'un aiguillage (6) respectif, et
a. au moins un capteur optique (7) disposé sur le ligne d'alimentation (5), qui est configurée pour déterminer des données de mesure d'une unité de transport (3) passant devant le capteur optique (7) ; et
b. une électronique d'évaluation (8) reliée au capteur optique (7), qui est configurée pour évaluer les données de mesure obtenues par le capteur optique (7) afin de déterminer l'extension spatiale dans au moins une dimension de l'unité de transport (3) en mouvement ; et
c. une commande (12) reliée à l'électronique d'évaluation (8), qui est configurée pour sélectionner, à l'aide de l'extension spatiale déterminée dans au moins une dimension de l'unité de transport (3), une section de stockage (4) pour le stockage de l'unité de transport (3), **caractérisée en ce que** la pluralité d'unités de transport (3) comprend respectivement une unité de portage (10) pour porter des marchandises à transporter (13), les unités de transport (3) comprenant un chariot (9) sur lequel une unité de support (10) pour porter des marchandises à transporter (13) est fixée de manière suspendue et mobile en pivotement et/ou en rotation.

10. Le dispositif de transport (1) selon la revendication 9, **dans lequel** l'électronique d'évaluation (8) est en outre configurée pour évaluer des points de mesure à partir des données de mesure afin de déterminer l'extension spatiale dans au moins une dimension de l'unité de transport (3) qui passe.

11. Le dispositif de transport (1) selon la revendication 9, **dans lequel** l'électronique d'évaluation (8) est en outre configurée, pour le traitement des données de mesure obtenues par le capteur optique (7), pour filtrer les données de mesure afin d'obtenir des points de mesure pour lesquels un paramètre optique est respectivement supérieur à une valeur seuil définissable.

12. Le dispositif de transport (1) selon la revendication 9 ou 1 1, **dans lequel** le capteur optique (7) est configurée pour déterminer les données de mesure essentiellement simultanément en plusieurs points qui se trouvent dans au moins un plan et qui comprennent chacun une distance spatiale entre l'unité de transport qui passe et le capteur optique (7), ainsi que le paramètre optique, le capteur optique (7) étant de préférence en outre configurée de manière à déterminer comme paramètre optique une intensité ou une polarisation dans le point de mesure respectif de la réflexion de la lumière.

13. Le dispositif de transport (1) selon l'une des revendications 9 à 12 précédentes, **dans lequel** l'électronique d'évaluation (8) est configurée de manière à déterminer, à partir des points de mesure des données de mesure sélectionnées, l'extension spatiale de l'unité de transport (3) dans au moins une dimension et/ou l'orientation de l'unité de transport par rapport au capteur optique (7) au moment de la détermination des données de mesure, en utilisant des procédés de régression.

14. Le dispositif de transport (1) selon l'une quelconque des revendications 9 à 13 précédentes, **dans lequel** le chariot (9) est apte à être transporté en suspension dans le dispositif de stockage (2).
